# EUROPÄISCHE PATENTSCHRIFT

(11) **EP 2 147 066 B1**
(45) Veröffentlichungstag und Bekanntmachung des Hinweises auf die Patenterteilung: **04.08.2010**
(21) Anmeldenummer: 08758353.0
(22) Anmeldetag: 29.04.2008
(51) Int. Cl.: C09D 17/00

(54) **WÄSSRIGE PIGMENTPRÄPARATIONEN**
AQUEOUS PIGMENT PREPARATIONS
PRÉPARATIONS AQUEUSES DE PIGMENTS

(30) Priorität: 10.05.2007 DE 102007021870
(43) Veröffentlichungstag der Anmeldung: 27.01.2010
(73) Patentinhaber: Clariant Finance (BVI) Limited, Road Town, Tortola (VG)
(72) Erfinder: FECHNER, Björn, 65817 Eppstein (DE); SCHAEFER, Carsten, 84453 Mühldorf am Inn (DE); WÖRNDLE, Alexander, 60313 Frankfurt am Main (DE)
(74) Vertreter: Hütter, Klaus
(86) Internationale Anmeldenummer: PCT/EP2008/003457
(87) Internationale Veröffentlichungsnummer: WO 2008/138487

(56) Entgegenhaltungen:
- EP-A- 1 142 972
- EP-A- 1 371 685
- WO-A-02/051948
- WO-A-03/037984
- WO-A-2006/074969
- US-A- 4 293 475
- US-B1- 6 582 510
- DATABASE WPI Week 200706 Thomson Scientific, London, GB; AN 2007-055948 XP002490843 & WO 2006/098261 A (SAKATA INKS CORP) 21. September 2006 (2006-09-21)

## Beschreibung

Gegenstand der vorliegenden Erfindung sind wässrige Pigmentpräparationen enthaltend neuartige nichtionische Polymere als Dispergiermittel, sowie ihre Verwendung zum Einfärben von natürlichen und synthetischen Materialien.

Für die Dispergierung von Pigmenten im flüssigen Medium sind üblicherweise Dispergiermittel notwendig. Dispergiermittel können anionischer, kationischer, amphoterer oder neutraler Struktur sein. Sie können niedermolekularer Natur sein oder höhermolekulare Polymere darstellen, die eine statistische, alternierende, blockartige, kammartige oder sternförmig angeordnete Architektur der polymerisierten Monomere ausbilden.

Von besonderer kommerzieller Bedeutung sind Dispergiermittel beispielsweise für die Dispergierung von Pigmenten bei der Herstellung von Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien.

Im Stand der Technik sind auch Pigmentpräparationen beschrieben, die geordnete Polymerstrukturen enthalten. Beispiele dafür sind EP 1 293 523, DE 10 2005 012 315 und EP 1 721 941.

Bislang ist es jedoch nicht gelungen, die in der Vergangenheit verwendeten nichtionischen Novolakdispergiermittel in ihrer Performance zu ersetzen, ohne Nachteile in Kauf nehmen zu müssen. Die früher gebräuchlichen Novolakdispergiermittel enthalten als Folge ihrer Herstellung Reste von Alkylphenolen, häufig Nonylphenol, und deren Ethoxylaten. Da Alkylphenolethoxylate bzw. deren Abbauprodukte in der Umwelt kaum abgebaut werden, reichern sie sich an. Dies ist problematisch, da sie auf Wasserorganismen eine hormonelle Wirkung zeigen. Daher wurden in vielen Ländern Rechtsvorschriften erlassen (z. B. 2003/53/EC), die den Einsatz von Stoffen, die Alkylphenole bzw. ihre Ethoxylate enthalten, in offenen Stoffkreisläufen beschränken bzw. verbieten.

Bisherige Untersuchungen haben gezeigt, dass es nach wie vor außerordentlich schwierig ist, Dispergiermittel zu synthetisieren, die nichtionischen Novolaksystemen äquivalent sind. Gefordert sind demnach neue Dispergiermittel, die organische Pigmente in hoher Konzentration von über 40 % niederviskos dispergieren können. Die Dispersionen müssen leicht herstellbar sein, d. h. die Pigmente müssen leicht benetzbar und leicht ins wässrige Medium einarbeitbar sein. Die Dispersion muss eine hohe und reproduzierbare Farbstärke aufweisen, die über einen Zeitraum von mehreren Jahren stabil erhalten bleibt. Ebenfalls sollten alle weiteren coloristischen Parameter wie z. B. der Bunttonwinkel und die Reinheit reproduzierbar und stabil sein. Die Dispersion sollte nicht schäumen bzw. keine Schaumbildung im Anwendungsmedium verursachen oder beschleunigen. Ferner sollten die Dispergiermittel zu einer breiten Verträglichkeit der Dispersionen in verschiedenen Anwendungsmedien beitragen. Zudem muss die Dispersion scherstabil sein, d. h. es darf sich unter Scherung die Farbstärke oder Coloristik nicht signifikant ändern.

Überraschenderweise wurde gefunden, dass spezielle nichtionische Copolymere, die mit Hilfe von Makromonomeren aus Polyethylen/Polypropylen-glykol-Mono(meth)acrylsäureestern hergestellt werden, die gestellte Aufgabe erfüllen und nichtionische Novolaksysteme in ihrer Performance als Dispergiermittel ersetzen können.

Gegenstand der vorliegenden Erfindung sind wässrige Pigmentpräparationen, enthaltend
(A) mindestens ein organisches und/oder anorganisches Pigment,
(B) ein Dispergiermittel der Formel (I) oder (II), oder Mischungen der Dispergiermittel der Formeln (I) und (II), 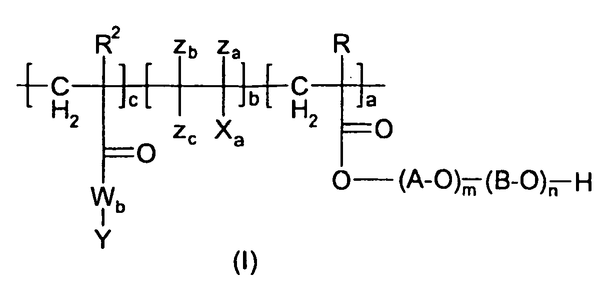 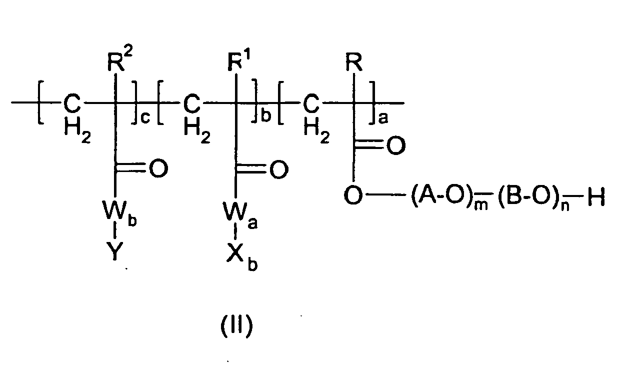 wobei

   die Indices a, b und c den molaren Anteil des jeweiligen Monomeren angeben
   a = 0,01 - 0,8
   b = 0,001 - 0,8
   c = 0,001 - 0,8
   wobei die Summe aus a + b + c gleich 1 ist und
   besonders bevorzugt
   a = 0,1 - 0,7
   b = 0,1 - 0,6
   c = 0,1 - 0,6
   wobei die Summe aus a + b + c gleich 1 ist,
   - A: für C₂-C₄-Alkylen und
   - B: für ein von A unterschiedliches C₂-C₄-Alkylen steht,
   - R: für Wasserstoff oder Methyl steht,
   - m: eine Zahl von 1 bis 500, vorzugsweise 1 bis 50, ist;
   - n: eine Zahl von 1 bis 500, vorzugsweise 1 bis 50, ist;
   wobei die Summe m + n gleich 2 bis 1.000 ist;
   - Xₐ: für einen aromatischen oder araliphatischen Rest mit 3 bis 30 C-Atomen steht, der gegebenenfalls eines oder mehrere der Heteroatome N, O und S enthält,
   - Zₐ: für H oder (C₁-C₄)-Alkyl steht,
   - Z_{b}: für H oder (C₁-C₄)-Alkyl steht,
   - Z_{c}: für H oder (C₁-C₄)-Alkyl steht;
   - R¹: für Wasserstoff oder Methyl steht,
   - X_{b}: für einen aromatischen oder araliphatischen Rest mit 3 bis 30 C-Atomen steht, der gegebenenfalls eines oder mehrere der Heteroatome N, O und S enthält,
   - Wₐ: für Sauerstoff oder die Gruppe NH steht,
   - R²: für Wasserstoff oder Methyl steht,
   - Y: für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
   - W_{b}: für Sauerstoff oder die Gruppe NH steht;
(C) gegebenenfalls Benetzer,
(D) gegebenenfalls weitere Tenside und/oder Dispergiermittel,
(E) gegebenenfalls ein oder mehrere organische Lösemittel und/oder eine oder mehrere hydrotrope Substanzen,
(F) gegebenenfalls weitere zur Herstellung wässriger Pigmentdispersionen übliche Zusatzstoffe, und
(G) Wasser.

Bevorzugte Pigmentpräparationen enthalten 5 bis 80 Gew.-%, beispielsweise 10 bis 70 Gew.-%, an Komponente (A).
Bevorzugte Pigmentpräparationen enthalten 0,1 bis 30 Gew.-%, beispielsweise 2 bis 15 Gew.-%, an Komponente (B).

Besonders bevorzugte Pigmentpräparationen enthalten an Komponente
(A) 5 bis 80 Gew.-%, beispielsweise 10 bis 70 Gew.-%,
(B) 0,1 bis 30 Gew.-%, beispielsweise 2 bis 15 Gew.-%,
(C) 0 bis 10 Gew.-%, beispielsweise 0,1 bis 5 Gew.-%,
(D) 0 bis 20 Gew.-%, beispielsweise 1 bis 10 Gew.-%,
(E) 0 bis 30 Gew.-%, beispielsweise 5 bis 20 Gew.-%,
(F) 0 bis 20 Gew.-%, beispielsweise 0,1 bis 5 Gew.-%,
(G) Rest Wasser,
jeweils bezogen auf das Gesamtgewicht (100 Gew.-%) der Pigmentpräparation.

Im Falle dass eine oder mehrere der Komponenten (C), (D), (E) und (F) vorhanden sind, beträgt deren Minimalkonzentration unabhängig voneinander zweckmäßigerweise mindestens 0,01 Gew.-%, bevorzugt mindestens 0,1 Gew.-%, bezogen auf das Gesamtgewicht der Pigmentpräparation.

Die Komponente (A) der erfindungsgemäßen Pigmentpräparation ist ein feinteiliges organisches oder anorganisches Pigment oder ein Gemisch verschiedener organischer und/oder anorganischer Pigmente. Die Komponente (A) kann auch ein Farbstoff sein, der in bestimmten Lösemitteln löslich ist und in anderen Lösemitteln Pigmentcharakter hat. Die Pigmente können sowohl in Form trockenen Pulvers als auch als wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z. B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Von den genannten organischen Pigmenten sind diejenigen besonders geeignet, die für die Herstellung der Präparationen möglichst feinteilig sind, wobei bevorzugt 95 % und besonders bevorzugt 99 % der Pigmentpartikel eine Teilchengröße ≤ 500 nm besitzen.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81, zu nennen.

Ferner eignen sich verlackte Farbstoffe wie Ca-, Mg-, Al-Lacke von sulfonsäure- und/oder carbonsäuregrüppenhaltigen Farbstoffen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Anstelle von Pigmentdispersionen lassen sich auch Dispersionen herstellen, die als Feststoffe beispielsweise natürliche feinteilige Erze, Mineralien, schwer- oder unlösliche Salze, Wachs- oder Kunststoffteilchen, Farbstoffe, Pflanzenschutz- und Schädlingsbekämpfungsmittel, UV-Absorber, optische Aufheller und Polymerisationsstabilisatoren enthalten.

Als Komponente (B) werden neuartige spezielle nichtionische Copolymere als Dispergiermittel eingesetzt. Die Copolymere besitzen ein Molekulargewicht von 10³ g/mol bis 10⁹ g/mol, besonders bevorzugt von 10³ bis 10⁷ g/mol, insbesondere bevorzugt 10³ bis 10⁵ g/mol.

Diese Polymere werden durch radikalische Polymerisation von Monomeren entsprechend den in den Klammern [ ]_{c}, [ ]_{b} und [ ]ₐ beschriebenen Resten in Formel (I) oder (II) hergestellt.
Das Herstellungsverfahren ist in der deutschen Patentanmeldung
DE 10 2007 021 868 beschrieben.

In einer bevorzugten Ausführungsform steht (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, wobei der molare Anteil der Ethylenoxid-Einheiten bevorzugt 50 bis 98 %, insbesondere 60 bis 95 %, besonders bevorzugt 70 bis 95 %, bezogen auf die Summe der Ethylenoxid- und Propylenoxid-Einheiten, beträgt.
Die Summe der Alkylenoxydeinheiten kann prinzipiell n + m = 2 bis 1.000 sein, bevorzugt ist 2 bis 500, insbesondere 2 bis 100, besonders bevorzugt 5 bis 100. Eine wesentliche Eigenschaft, die die erfindungsgemäßen Polymere auszeichnet, ist, dass es sich bei den Polyalkylenglykol-Seitenketten des Polymers nicht um reine Polyethylenglykole oder Polypropylenglykole handelt. Stattdessen sind die Polyalkylenglykole entweder statistische oder blockartige Polyalkylenglykole aus Propylenoxid- und Ethylenoxid-Einheiten. Erst die Feinabstimmung dieses EO/PO-Verhältnisses ermöglicht polymere Dispergiermittel, die zum Herstellen von hochkonzentrierten Pigmentdispersionen mit niedriger Viskosität geeignet sind. Durch die optimierten Verhältnisse des EO/PO-Anteils im Monomer [ ]ₐ in Kombination mit den aromatischen und aliphatischen Monomeren [ ]_{b} und [ ]_{c} gelingt es, die Eigenschaften von novolakartigen Dispergiermitteln so nachzubilden, dass ein sehr ähnliches Eigenschaftsprofil erhalten wird.

Zu den Monomeren der Gruppe [ ]_{b} gehören beispielsweise die folgenden Ester und Amide der Acrylsäure und Methacrylsäure: Phenyl, Benzyl, Tolyl, 2-Phenoxyethyl, Phenethyl. Weitere Monomere können vinylaromatische Monomere wie Styrol und seine Derivate sein, wie beispielsweise Vinyltoluol, α-Methylstyrol. Bei der aromatischen Einheit kann es sich auch um Heteroaromaten handeln, wie z. B. in 1-Vinylimidazol.
Besonders bevorzugte Monomere der Gruppe [ ]_{b} können sein: Styrol, 1-Vinylimidazol, Benzylmethacrylat, 2-Phenoxyethylmethacrylat und Phenethylmethacrylat.

Zu den Monomeren der Gruppe [ ]_{c} gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Oktyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl-.

Bevorzugte Monomere der Gruppe [ ]_{c} sind die folgenden Alkyl-Ester bzw. Alkyl-Amide der Acrylsäure und Methacrylsäure: Methyl-, Ethyl-, Propyl-, Butyl-, Isobutyl-, 2-Ethoxyethyl-, Myristyl-, Octadecyl-, besonders bevorzugt 2-Ethylhexyl- und Lauryl-.

Als Komponente (C) werden beispielsweise kationische, anionische, amphotere oder nicht ionogene Verbindungen verwendet, die die Pigmentbenetzung fördern (Netzmittel, Benetzter).

Als Komponente (D) der erfindungsgemäßen Pigmentpräparationen dienen übliche, zur Herstellung wässriger Pigmentdispersionen geeignete Dispergiermittel und Tenside oder Gemische solcher Substanzen. Üblicherweise werden anionische, kationische, amphotere oder nichtionische grenzflächenaktive Verbindungen hierfür verwendet. Besonders bewährt haben sich darunter Dispergiermittel, die eine oder mehrere mittel- oder langkettige Kohlenwasserstoffketten besitzen, zum Teil auch solche, die über aromatische Ringgruppen verfügen. Von der Vielzahl der Verbindungen soll an dieser Stelle nur eine Auswahl angeführt werden, ohne jedoch die Anwendbarkeit der erfindungsgemäßen Verbindungen auf diese Beispiele einzuschränken. Beispiele sind Alkylsulfate wie z. B. Laurylsulfat, Stearylsulfat oder Octadecylsulfat, primäre Alkylsulfonate wie z. B. Dodecylsulfonat, und sekundäre Alkylsulfonate, insbesondere das C₁₃-C₁₇-Alkansulfonat-Natriumsalz, Alkylphosphate, Alkylbenzolsulfonate wie beispielsweise die Dodecylbenzolsulfonsäure, ebenso alle Salze dieser Verbindungen. Ferner eignet sich Sojalecithin oder es werden Kondensationsprodukte aus Fettsäure und Taurin oder Hydroxyethansulfonsäure verwendet, ebenso Alkoxylierungsprodukte von Alkylphenolen, Rizinusölkolophoniumestern, Fettalkoholen, Fettaminen, Fettsäuren und Fettsäureamiden, diese Alkoxylierungsprodukte können desgleichen mit ionischen Endgruppen ausgestattet sein, beispielsweise als Sulfobernsteinsäure-Halbester oder auch als Sulfonsäure-, Schwefelsäure- und Phosporsäureester, sowie deren Salze, den Sulfonaten, Sulfaten oder Phosphaten. Auch sind oxalkylierte Additionsverbindungen, die durch Umsetzung von Polyepoxiden mit Aminen oder Bisphenol-A bzw. Bisphenol-A-Derivaten mit Aminen erhalten werden, geeignet, in ähnlicher Weise auch Harnstoffderivate.

Ebenso eignen sich nichtionische alkoxylierte Styrol-Phenol-Kondensate, die durch Anlagerung von gegebenenfalls substituierten Styrolen an gegebenenfalls substituierten Phenolen und Umsetzung mit Ethylenoxid und/oder Propylenoxid erhalten werden, ebenso deren ionisch modifizierten Derivate, beispielsweise als Sulfonsäure-, Schwefelsäure- und Phosphorsäureester, sowie deren Salze, den Sulfonaten, Sulfaten oder Phosphaten. Zudem eignen sich als grenzflächenaktive Verbindungen auch Ligninsulfonate und Polykondensate aus Naphthalinsulfonsäure und Formaldehyd bzw. auch aus Alkylarylsulfonsäuren, Halogenarylsulfonsäure, sulfonierten Phenolen oder sulfonierten Naphtholen mit Formaldehyd.

Der Komponente (E) entsprechen organische Lösemittel oder wasserlösliche hydrotrope Substanzen. Hydrotrope Verbindungen, die gegebenenfalls auch als Lösemittel dienen, oder oligomerer oder polymerer Natur sind, sind beispielsweise Formamid, Harnstoff, Tetramethylharnstoff, ε-Caprolactam, Ethylenglykol, Propylenglykol, Diethylenglykol, Triethylenglykol, Polyethylenglykol, α-Methyl-ωhydroxy-polyethylenglykolether, Dimethylpolyethylenglykolether, Dipropylenglykol, Polypropylenglykol, Dimethylpolypropylenglykolether, Copolymere aus Ethylen- und Propylenglykol, Butylglykol, Methylcellulose, Glycerin, Diglycerin, Polyglycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat, Natrium-Butylmonoglykolsulfat, Cellulosederivate, Gelatinederivate, Polyvinylpyrrolidon, Polyvinylalkohol, Polyvinylimidazol und Co- und Terpolymere aus Vinylpyrrolidon, Vinylacetat und Vinylimidazol, wobei anschließend die Polymere mit Vinylacetatbausteinen einer Verseifung zum Vinylalkohol unterzogen werden können.

Als Komponente (F) werden beispielsweise Verdicker, Konservierungsmittel, Viskositätsstabilisatoren, Mahlhilfsmittel und Füllstoffe eingesetzt. Weitere übliche Zusatzstoffe können Antiabsetzmittel, Lichtschutzmittel, Antioxidantien, Entgaser/Entschäumer, schaumreduzierende Mittel sein, Antibackmittel sowie Additive, welche die Viskosität und Rheologie günstig beeinflussen. Als Mittel zur Regulierung der Viskosität kommen z. B. Polyvinylalkohol und Cellulosederivate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak. Der Komponente (F) können auch Fette und Öle pflanzlicher und tierischer Herkunft entsprechen, beispielsweise Rindertalg, Palmkernfett, Kokosfett, Rapsöl, Sonnenblumenöl, Leinöl, Palmöl, Sojaöl, Erdnussöl und Walöl, Baumwollsaatöl, Maisöl, Mohnöl, Olivenöl, Rizinusöl, Rüböl, Safloröl, Sojabohnenöl, Distelöl, Sonnenblumenöl, Heringöl, Sardinenöl. Auch sind die gesättigten und ungesättigten höheren Fettsäuren gängige Additive, z. B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Zur Herstellung der Pigmentpräparationen benutztes Wasser, Komponente (G), wird vorzugsweise in Form von entsalztem oder destilliertem Wasser eingesetzt. Auch Trinkwasser (Leitungswasser) und/oder Wasser natürlichen Ursprungs kann verwendet werden.

Gegenstand der vorliegenden Erfindung ist auch ein Verfahren zur Herstellung der erfindungsgemäßen Pigmentpräparationen, dadurch gekennzeichnet, dass man die Komponente (A) in Form von Pulver, Granulat oder wässrigem Presskuchen in Gegenwart von Wasser (G) sowie den Komponenten (B) und gegebenenfalls (C) und (D) dispergiert, anschließend gegebenenfalls Wasser (G), sowie gegebenenfalls eine oder mehrere der Komponenten (E) und (F) zumischt und gegebenenfalls die erhaltene wässrige Pigmentdispersion mit Wasser (G) verdünnt. Vorzugsweise werden die Komponenten (B) und gegebenenfalls eine oder mehrere der Komponenten (C), (D), (E) und (F) zunächst vermischt und homogenisiert, dann die Komponente (A) in die vorgelegte Mischung eingerührt, wobei die Komponente (A) angeteigt und vordispergiert wird. Je nach Kornhärte der Komponente (A) wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Komponente (A) erfolgt bis zur gewünschten Teilchengrößenverteilung und kann bei Temperaturen im Bereich von 0 bis 100 °C erfolgen, zweckmäßig bei einer Temperatur zwischen 10 und 70 °C, vorzugsweise bei 20 bis 60 °C. Im Anschluss an die Feindispergierung kann die Pigmentpräparation mit Wasser (G), vorzugsweise entionisiertem oder destilliertem Wasser, weiter verdünnt werden.

Die erfindungsgemäßen Pigmentpräparationen eignen sich zum Pigmentieren und Färben von natürlichen und synthetischen Materialien aller Art, insbesondere von wässrigen Anstrichmitteln, Dispersions- und Lackfarben (Dispersionslacken). Ferner eignen sich die erfindungsgemäßen Pigmentpräparationen zur Einfärbung makromolekularer Materialien aller Art, z. B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, auch Pulverlacken, Wurstdärmen, Saatgut, Düngemittel, Glas, insbesondere Glasflaschen, sowie zur Massefärbung von Dachziegeln, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien aller Art. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentpräparationen zur Herstellung von Drucktinten für den Einsatz in allen konventionellen Ink-Jet-Druckern, insbesondere für solche, die auf dem Bubble-Jet- oder Piezo-Verfahren beruhen. Mit diesen Drucktinten können Papier bedruckt werden, sowie natürliche oder synthetische Fasermaterialien, Folien und Kunststoffe. Zudem können die erfindungsgemäßen Pigmentpräparationen zum Bedrucken verschiedenster Arten von beschichteten oder unbeschichteten Substratmaterialien verwendet werden, so z. B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d. h. dreidimensional gestaltet sein und sowohl vollständig oder nur teilweise bedruckt oder beschichtet werden.

Die erfindungsgemäßen Pigmentpräparationen sind außerdem geeignet als Farbmittel in elektrophotographischen Tonern und Entwicklern, wie z. B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner. Typische Tonerbindemittel hierbei sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Außerdem sind die erfindungsgemäßen Pigmentpräparationen als Farbmittel in Tinten, vorzugsweise Ink-Jet Tinten, wie z.B. auf wässriger oder nichtwässriger Basis ("Solvent Based"), Mikroemulsionstinten, UV-härtbare Tinten sowie in solchen Tinten, die nach dem Hot-Melt-Verfahren funktionieren, geeignet.

Außerdem können die erfindungsgemäßen Pigmentpräparationen auch als Farbmittel für Farbfilter ("Color Filter") für "Flat Panel Displays", sowohl für die additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper") eingesetzt werden.

### Beispiele

### Herstellung der Dispergiermittel (B):

### Synthesebeispiel 1

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 136,4 g 2-Ethylhexylmethacrylat, 71,6 g Styrol und 16,5 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 16,5 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt.

Die nachfolgenden Synthesebeispiele werden analog Synthesebeispiel 1 unter Einsatz der folgenden Ausgangsstoffe durchgeführt:

### Synthesebeispiel 2

210 g Polyalkylenglykolmonomethacrylat (Molmasse 350, molares EO/PO-Verhältnis 1,7), 79,2 g 2-Ethylhexylmethacrylat, 41,6 g Styrol.

### Synthesebeispiel 3

258 g Polyalkylenglykolmonomethacrylat (Molmasse 750, molares EO/PO-Verhältnis 6,3), 87,5 g Laurylmethacrylat, 35,8 g Styrol.

### Synthesebeispiel 4

210 g Polyalkylenglykolmonomethacrylat (Molmasse 350, molares EO/PO-Verhältnis 1,7), 101,6 g Laurylmethacrylat, 41,6 g Styrol.

### Synthesebeispiel 5

363 g Polyalkylenglykolmonomethacrylat (Molmasse 1.100, molares EO/PO-Verhältnis 10,2, 70 %ig in t-Butanol), 117,3 g Laurylmethacrylat, 48,0 g Styrol.

### Synthesebeispiel 6

452 g Polyalkylenglykolmonomethacrylat (Molmasse 2.000, molares EO/PO-Verhältnis 20,5, 70 %ig in t-Butanol), 80,4 g Laurylmethacrylat, 32,9 g Styrol.

### Synthesebeispiel 7

210 g Polyalkylenglykolmonomethacrylat (Molmasse 350, molares EO/PO-Verhältnis1,7), 202,8 g Stearylmethacrylat, 62,4 g Styrol.

### Synthesebeispiel 8

258 g Polyalkylenglykolmonomethacrylat (Molmasse 750, molares EO/PO-Verhältnis 6,3), 38,2 g Isobornylmethacrylat, 30,3 g Benzylmethacrylat.

### Synthesebeispiel 9

363 g Polyalkylenglykolmonomethacrylat (Molmasse 1.100, molares EO/PO-Verhältnis 10,2, 70 % in t-Butanol), 39,3 g Tetrahydrofurfurylmethacrylat, 87,8 g Phenethylmethacrylat.

### Synthesebeispiel 10

452 g Polyalkylenglykolmonomethacrylat (Molmasse 2.000, molares EO/PO-Verhältnis 20,5, 70 %ig in 1-Butanol), 25,0 g 2-Ethoxyethylmethacrylat, 29,7 g 1-Vinylimidazol.

### Synthesebeispiel 11

210 g Polyalkylenglykolmonomethacrylat (Molmasse 350, molares EO/PO-Verhältnis1,7), 69,0 g Laurylacrylat, 52,8 g Benzylmethacrylat.

### Synthesebeispiel 12

258 g Polyalkylenglykolmonomethacrylat (Molmasse 750, molares EO/PO-Verhältnis 6,3), 38,2 g 1-Vinyl-2-Pyrrolidon, 107,3 g Styrol.

### Synthesebeispiel 13

452 g Polyalkylenglykolmonomethacrylat (Molmasse 2.000, molares EO/PO-Verhältnis 20,5, 70 %ig in t-Butanol), 31,3 g 2-Ethylhexylmethacrylat, 27,8 g Benzylmethacrylat.

### Synthesebeispiel 14

363 g Polyalkylenglykolmonomethacrylat (Molmasse 1.100, molares EO/PO-Verhältnis 10,2, 70 % in t-Butanol), 58,7 g Laurylmethacrylat, 43,9 g Phenethylmethacrylat.

### Synthesebeispiel 15

258 g Polyalkylenglykolmonomethacrylat (Molmasse 750, molares EO/PO-Verhältnis 6,3), 116,3 g Stearylmethacrylat, 70,9 g 2-Phenoxyethylmethacrylat.

### Synthesebeispiel 16

210 g Polyalkylenglykolmonomethacrylat (Molmasse 350, molares EO/PO-Verhältnis 0,43), 72,0 g Laurylacrylat, 52,8 g Benzylmethacrylat.

### Synthesebeispiel 17

258 g Polyalkylenglykolmonomethacrylat (Molmasse 750, molares EO/PO-Verhältnis 0,22), 87,5 g Laurylmethacrylat, 35,8 g Styrol.

### Synthesebeispiel 18

363 g Polyalkylenglykolmonomethacrylat (Molmasse 1.100, molares EO/PO-Verhältnis 0,30, 70 % in t-Butanol), 58,7 g Laurylmethacrylat, 43,9 g Phenethylmethacrylat.

### Synthesebeispiel 19

388 g Polyalkylenglykolmonomethacrylat (Molmasse 750, molares EO/PO-Verhältnis 6,3), 68,2 g 2-Ethylhexylmethacrylat, 35,8 g Styrol.

### Synthesebeispiel 20

517 g Polyalkylenglykolmonomethacrylat (Molmasse 750, molares EO/PO-Verhältnis 6,3), 68,2 g 2-Ethylhexylmethacrylat, 35,8 g Styrol.

### Synthesebeispiel 21

280 g Polyalkylenglykolmonomethacrylat (Molmasse 350, molares EO/PO-Verhältnis 1,7), 79,2 g 2-Ethylhexylmethacrylat, 41,6 g Styrol.

### Synthesebeispiel 22

387 g Polyalkylenglykolmonomethacrylat (Molmasse 750, molares EO/PO-Verhältnis 6,3), 87,5 g Laurylmethacrylat, 35,8 g Styrol.

### Synthesebeispiel 23

267 g Polyalkylenglykolmonomethacrylat (Molmasse 350, molares EO/PO-Verhältnis 1,7), 101,6 g Laurylmethacrylat, 41,6 g Styrol.

### Vergleichs-Synthesebeispiel 1:

### Copolymer nach DE 10 2005 019 384, Bsp. 1

In einem 1-Liter-Dreihalskolben, welcher mit einem Thermometer, einem Stickstoffanschluss sowie einem Intensivkühler versehen war, wurden 291,8 g Styrol, 603,3 g Methacrylsäure sowie 209,8 g Methoxypolyethylenglykolmethacrylat (1.000 g/mol) (MPEG 1000 MA) (50 % in Wasser) unter Rühren in Tetrahydrofuran gelöst. Dann wurden 30,2 g Dibenzoylperoxid (75 % in Wasser) zugegeben und der Kolbeninhalt unter leichtem Stickstoffstrom auf 65 °C temperiert. Die Mischung wurde für 18 Stunden unter Rückfluss erhitzt. Anschließend wurde auf etwa Raumtemperatur abgekühlt.

Unter starkem Rühren wurden portionsweise 73,75 g festes NaOH sowie 1,25 L entionisiertes Wasser zugegeben. Nachdem der Kolbeninhalt wieder gelöst war, wurde Tetrahydrofuran, Wasser sowie nicht umgesetztes Styrol unter reduziertem Druck abdestilliert. Der Druck wurde dabei so gewählt, dass die Temperatur der Mischung 40 °C nicht überstieg. Die eingeengte Polymerlösung wurde mit Wasser auf einen Feststoffgehalt von ca. 33 Gew.-% eingestellt.

### Herstellung einer Pigmentpräparation:

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

Die in den folgenden Beispielen beschriebenen Pigmentpräparationen wurden nach dem zuvor beschriebenen Verfahren hergestellt, wobei die Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beurteilung einer Pigmentpräparation

Die Bestimmung der Farbstärke und des Farbtons erfolgte nach DIN 55986. Für den "Rub-Out-Test" wurde die Dispersionsfarbe oder der Lack nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben). Die Farbstärke und die Verträglichkeiten mit den einzufärbenden Medien wurden mit 6 verschiedenen Weißdispersionen ermittelt:
1. Weißdispersion A (für Außenanstriche, Wasserbasis, 20 % TiO₂)
2. Weißdispersion B (für Außenanstriche, Wasserbasis, 13,4 % TiO₂)
3. Weißdispersion C (für Außenanstriche, Wasserbasis, 22,6 % TiO₂)
4. Weißdispersion D (für Außenanstriche, Wasserbasis, Bindemittel Polysiloxanemulsion, TiO₂, Talkum, Calciumcarbonat)
5. Weißdispersion E (für Innenanstriche, Wasserbasis, Polymerdispersion, frei von Lösemittel und Weichmachern, emissionsarm, TiO₂, Calciumcarbonat)
6. Weißdispersion F (für Innenanstriche, Wasserbasis, Polyacrylate, TiO₂, Calciumcarbonat)

Die Viskosität wurde mit einem Kegel-Platte-Viskosimeter (Roto Visco 1) der Firma Haake bei 20 °C bestimmt (Titankegel: Ø 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.
Für eine Beurteilung der Lagerstabilität der Dispersionen wurde die Viskosität direkt nach der Herstellung der Präparation gemessen, sowie nach vierwöchiger Lagerung bei 50 °C.

Die Scherstabilität und das Schaumverhalten wurden nach Scherung einer auf 2 % verdünnten Präparation mit einem handelsüblichen Küchenmixer (Braun MX 32) unter Einstellung einer hohen Rotationsgeschwindigkeit beobachtet. Je scherstabiler die Präparation ist, desto geringer ist der Farbstärkeabfall nach Scherung im Vergleich der Farbstärke einer gescherten zu einer ungescherten Dispersion. Nach Abstellen des Mixers wurde das Schaumverhalten beobachtet.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beispiel 1

| | |
|---|---|
| 50,0 Teile | Komponente (A), C.I. Pigment Blue 15 |
| 7,0 Teile | Komponente (B), Dispergiermittel entsprechend Synthesebeispiel 19 |
| 2,0 Teile | Komponente (C), Benetzer |
| 8,0 Teile | Komponente (E), Ethylenglykol |
| 0,2 Teile | Komponente (F), Konservierungsmittel |
| Rest | Komponente (G), Wasser |

Die Pigmentpräparation hat eine durchweg hohe Farbstärke und ist stabil. In alle 6 Weißdispersionen A bis F lässt sie sich unter leichter Verteilbarkeit sehr gut einarbeiten. Der Rub-Out-Test zeigt in allen Fällen keine Farbstärkeunterschiede im Vergleich zur nachgeriebenen Fläche. Die Präparation erweist sich als gut fließfähig und lagerstabil, da sie nach 28 Tagen Lagerung bei 50 °C ebenfalls noch gut fließfähig ist. Die Viskosität nach der Herstellung beträgt 642 mPa·s. Die Präparation ist scherstabil und schäumt nicht.

### Beispiel 2

| | |
|---|---|
| 45,0 Teile | Komponente (A), C.I. Pigment Red 112 |
| 8,0 Teile | Komponente (B), Dispergiermittel entsprechend Synthesebeispiel 23 |
| 1,0 Teile | Komponente (C), Benetzer |
| 10,0 Teile | Komponente (E), Propylenglykol |
| 0,2 Teile | Komponente (F), Konservierungsmittel |
| Rest | Komponente (G), Wasser |

Die Pigmentpräparation hat eine durchweg hohe Farbstärke und ist stabil. In alle 6 Weißdispersionen lässt sie sich unter leichter Verteilbarkeit sehr gut einarbeiten. Der Rub-Out-Test zeigt in den sechs Fällen keine Farbstärkeunterschiede im Vergleich zur nachgeriebenen Fläche. Die Präparation erweist sich als gut fließfähig und lagerstabil, da sie nach 28 Tagen Lagerung bei 50 °C ebenfalls noch gut fließfähig ist. Die Viskosität nach der Herstellung beträgt 278 mPa·s. Die Präparation ist scherstabil und schäumt nicht.

### Beispiel 3

| | |
|---|---|
| 65,0 Teile | Komponente (A), C.I. Pigment Yellow 42 |
| 4,0 Teile | Komponente (B), Dispergiermittel entsprechend Synthesebeispiel 11 |
| 1,0 Teile | Komponente (C), Benetzer |
| 15,0 Teile | Komponente (E), Propylenglykol |
| 0,2 Teile | Komponente (F), Konservierungsmittel |
| Rest | Komponente (G), Wasser |

Die Pigmentpräparation hat eine durchweg hohe Farbstärke und ist stabil. In 5 Weißdispersionen lässt sie sich unter leichter Verteilbarkeit sehr gut einarbeiten, in der 6. Weißdispersionen ist die Einarbeitbarkeit erschwert, aber homogen durchführbar. Der Rub-Out-Test zeigt in den sechs Fällen keine Farbstärkeunterschiede im Vergleich zur nachgeriebenen Fläche. Die Präparation erweist sich als gut fließfähig und lagerstabil, da sie nach 28 Tagen Lagerung bei 50 °C ebenfalls noch gut fließfähig ist. Die Viskosität nach der Herstellung beträgt 1.765 mPa·s. Die Präparation ist scherstabil und schäumt nicht.

### Beispiel 4

| | |
|---|---|
| 40,0 Teile | Komponente (A), C.I. Pigment Red 168 |
| 12,0 Teile | Komponente (B), Dispergiermittel entsprechend der Formel (II), Synthesebeispiel 18 |
| 20,0 Teile | Komponente (E), Ethylenglykol |
| 0,2 Teile | Komponente (F), Konservierungsmittel |
| Rest | Komponente (G), Wasser |

Die Pigmentpräparation hat eine durchweg hohe Farbstärke und ist stabil. In alle 6 Weißdispersionen lässt sie sich unter leichter Verteilbarkeit sehr gut einarbeiten. Der Rub-Out-Test zeigt in den sechs Fällen keine Farbstärkeunterschiede im Vergleich zur nachgeriebenen Fläche. Die Präparation erweist sich als gut fließfähig und lagerstabil, da sie nach 28 Tagen Lagerung bei 50 °C ebenfalls noch gut fließfähig ist. Die Viskosität nach der Herstellung beträgt 894 mPa·s. Die Präparation ist scherstabil und schäumt nicht.

### Beispiel 5

| | |
|---|---|
| 40,0 Teile | Komponente (A), C.I. Pigment Black 7 |
| 6,5 Teile | Komponente (B), Dispergiermittel entsprechend Synthesebeispiel 21 |
| Rest | Komponente (G), Wasser |

Die Pigmentpräparation hat eine durchweg hohe Farbstärke und ist stabil. In alle 6 Weißdispersionen lässt sie sich unter leichter Verteilbarkeit sehr gut einarbeiten. Der Rub-Out-Test zeigt in den sechs Fällen keine Farbstärkeunterschiede im Vergleich zur nachgeriebenen Fläche. Die Präparation erweist sich als gut fließfähig und lagerstabil, da sie nach 28 Tagen Lagerung bei 50 °C ebenfalls noch gut fließfähig ist. Die Viskosität nach der Herstellung beträgt 483 mPa·s. Die Präparation ist scherstabil und schäumt nicht.

### Beispiel 6

| | |
|---|---|
| 50,0 Teile | Komponente (A), C.I. Pigment Green 7 |
| 7,5 Teile | Komponente (B), Dispergiermittel entsprechend Synthesebeispiel 2 |
| 15,0 Teile | Komponente (E), Propylenglykol |
| 0,2 Teile | Komponente (F), Konservierungsmittel |
| Rest | Komponente (G), Wasser |

Die Pigmentpräparation hat eine durchweg hohe Farbstärke und ist flockungsstabil. In alle 6 Weißdispersionen lässt sie sich unter leichter Verteilbarkeit sehr gut einarbeiten. Der Rub-Out-Test zeigt in den sechs Fällen keine Farbstärkeunterschiede im Vergleich zur nachgeriebenen Fläche. Die Präparation erweist sich als gut fließfähig und lagerstabil, da sie nach 28 Tagen Lagerung bei 50 °C ebenfalls noch gut fließfähig ist. Die Viskosität nach der Herstellung beträgt 669 mPa·s. Die Präparation ist scherstabil und schäumt nicht.

### Vergleichsbeispiel

| | |
|---|---|
| 45,0 Teile | Komponente (A), C.I. Pigment Rot 112 |
| 8,0 Teile | Komponente (B), Dispergiermittel basierend auf Vergleichs-Synthesebeispeil 1 |
| 1,3 Teile | Komponente (C), Benetzer |
| 10,0 Teile | Komponente (E), Propylenglykol |
| 0,2 Teile | Komponente (F), Konservierungsmittel |
| 35,5 Teile | Komponente (G), Wasser |

Die Pigmentpräparation hat eine hohe Farbstärke nur in den Weißdispersionen A, B, C, E. In den Weißdispersionen D und F liegt die Farbstärke bei 85 bzw. 90 %. Die Systeme D und F zeigen einen ausgeprägten Rub-Out, in B ist ein leichter Rub-Out feststellbar. Die Dispersion ist nicht ausreichend lagerstabil, da sie nach 28 Tagen Lagerung bei 50 °C fest geworden ist.

Weitere Beispiele zu Pigmentpräparationen sind in der folgenden Tabelle enthalten. Es wird jeweils eine 40 %ige Pigmentpräparationen hergestellt auf Basis Pigment Yellow 83 nach folgendem Rezept:

| | |
|---|---|
| 40,0 Teile | Komponente (A), C.I. Pigment Yellow 83 |
| 10,0 Teile | Komponente (B), Dispergiermittel entsprechend der Formel (I) oder (II), aus dem Synthesebeispiel wie in der Tabelle angegeben |
| 1,0 Teile | Komponente (C), Benetzer |
| 10,0 Teile | Komponente (E), Propylenglykol |
| 0,2 Teile | Komponente (F), Konservierungsmittel |
| Rest | Komponente (G), Wasser |

Die Buchstaben A, bis F geben die Bezeichnung der Weißdispersion wieder, in der getestet wurde. FS ist die Abkürzung für Farbstärke.

| Synthese beispiel Nr. | A | B | C | D | E | F | Viskosität nach Herstellung | Lager stabilität |
|---|---|---|---|---|---|---|---|---|
| 1 | FS 103%. kein Rub-out, keine Flockulation | FS 100%, kein Rub-out, keine Flockulation | FS 106%, kein Rub-out, keine Flockulation | FS 104%, geringer Rub-out, keine Flockulation | FS 110%, kein keine Flockulation | FS 98%, Rub-out, kein Rub-out, keine Flockulation | 467 mPas | sehr gut |
| 2 | FS 104%, kein Rub-out, keine Flockulation | FS 101%, kein Rub-out, keine Flockulation | FS 99%, kein Rub-out, keine Flockulation | FS 105%, geringer Rub-out, keine Flockulation | FS 100%, kein keine Flockulation | FS 101%, Rub-out, keine Flockulation | 988 mPas | gut |
| 3 | FS 100%, kein Rub-out, keine Flockulation | FS 99%, kein Rub-out, keine Flockulation | FS 99%, kein Rub-out, keine Flockulation | FS 105%, geringer Rub-out, keine Flockulation | FS 105%, kein Rub-out, keine Flockulation | FS 102%, geringer Rub-out, sehr geringe Flockulation | 165mPas | sehr gut |
| 4 | FS 101%, kein Rub-out, keine Flockulation | FS 101%, kein Rub-out, keine Flockulation | FS 101%, kein Rub-out, keine Flockulation | FS 101%, geringer Rub-out, keine Flockulation | FS 101%, kein Rub-out, keine Flockulation | FS 101%, kein Rub-out, keine Flockulation | 535 mPas | sehr gut |
| 5 | FS 102%, kein Rub-out, keine Flockulation | FS 105%, kein Rub-out, keine Flockulation | FS 100%, kein Rub-out, keine Flockulation | FS 105%, geringer Rub-out, geringe Flockulation | FS 110%, kein Rub-out, keine Flockulation | FS 102%, kein Rub-out, keine Flockulation | 624 mPas | sehr gut |
| 6 | FS 105%. kein Rub-out, keine Flockulation | FS 102%, kein Rub-out, keine Flockulation | FS 103%, kein Rub-out, keine Flockulation | FS 99%, geringer Rub-out, keine Flockulation | FS 99%, kein Rub-out, keine Flockulation | FS 104%, kein Rub-out, keine Flockulation | 836 mPas | gut |
| 7 | FS 102%, kein Rub-out, keine Flockulation | FS 102%. kein Rub-out, keine Flockulation | FS 110%, kein Rub-out, keine Flockulation | FS 105%. geringer Rub-out, geringe Flockulation | FS 102%, kein Rub-out, keine Flockulation | FS 99%, kein Rub-out, keine Flockulation | 349 mPas | sehr gut |
| 8 | FS 98%. kein Rub-out, keine Flockulation | FS 104%, kein Rub-out, keine Flockulation | FS 99%, kein Rub-out, keine Flockulation | FS 106%, geringer Rub-out, keine Flockulation | FS 100%, kein Rub-out, keine Flockulation | FS 104%, kein Rub-out, keine Flockulation | 571 mPas | sehr gut |
| 9 | FS 105%, kein Rub-out, keine Flockulation | FS 95%, kein Rub-out, keine Flockulation | FS 103%, kein Rub-out, keine Flockulation | FS 108%, geringer Rub-out, geringe Flockulation | FS 105%, kein Rub-out, keine Flockulation | FS 97%, kein Rub-out, keine Flockulation | 605 mPas | sehr gut |
| 10 | FS 101%, kein Rub-out, keine Flockulation | FS 101%, kein Rub-out, keine Flockulation | FS 101%, kein Rub-out, keine Flockulation | FS 101%, kein Rub-out, keine Flockulation | FS 101%, kein Rub-out, keine Flockulation | FS 101%, kein Rub-out, keine Flockulation | 467 mPas | sehr gut |
| 11 | FS 102%, kein Rub-out, keine Flockulation | FS 104%, kein Rub-out, keine Flockulation | FS 99%, kein Rub-out, keine Flockulation | FS 97%, geringer Rub-out, keine Flockulation | FS 99%, kein Rub-out, keine Flockulation | FS 103%, kein Rub-out, keine Flockulation | 735 mPas | gut |
| 12 | FS 103%. kein Rub-out, keine Flockulation | FS 104%, kein Rub-out, keine Flockulation | FS 102%, kein Rub-out, keine Flockulation | FS 99%, geringer Rub-out, keine Flockulation | FS 102%, kein keine Flockulation | FS 106%, Rub-out, kein Rub-out, keine Flockulation | 367 mPas | sehr gut |
| 13 | FS 96%. kein Rub-out, keine Flockulation | FS 99%, kein Rub-out, keine Flockulation | FS 98%, kein Rub-out, keine Flockulation | FS 94%, geringer Rub-out, keine Flockulation | FS 103%, kein Rub-out, keine Flockulation | FS 100%, kein Rub-out, keine Flockulation | 565 mPas | sehr gut |
| 14 | FS 99%, kein Rub-out, keine Flockulation | FS 101%, kein Rub-out, keine Flockulation | FS 103%, kein Rub-out, keine Flockulation | FS 100%, kein Rub-out, keine Flockulation | FS 101%, kein Rub-out, keine Flockulation | FS 97%, kein Rub-out, keine Flockulation | 625 mPas | sehr gut |
| 15 | FS 105%, kein Rub-out, keine Flockulation | FS 104%, kein Rub-out, keine Flockulation | FS 100%, kein Rub-out, keine Flockulation | FS 99%, geringer Rub-out, keine Flockulation | FS 98%, kein Rub-out, keine Flockulation | FS 101%, kein Rub-out, keine Flockulation | 1169 mPas | sehr gut |
| 16 | FS 99%, kein Rub-out, keine Flockulation | FS 99%, kein Rub-out, keine Flockulation | FS 101%, kein Rub-out, keine Flockulation | FS 104%, geringer Rub-out, geringe Flockulation | FS 109%, kein keine Flockulation | FS 100%, Rub-out, kein Rub-out, keine Flockulation | 564 mPas | gut |
| 17 | FS 105%, kein Rub-out, keine Flockulation | FS 110%, kein Rub-out, keine Flockulation | FS 102%, kein Rub-out, keine Flockulation | FS 100%, geringer Rub-out, keine Flockulation | FS 105%, kein Rub-out, keine Flockulation | FS 108%, kein Rub-out, keine Flockulation | 238mPas | sehr gut |
| 18 | FS 103%, kein Rub-out, keine Flockulation | FS 102%, kein Rub-out, keine Flockulation | FS 105%, kein Rub-out, keine Flockulation | FS 110%, geringer Rub-out, keine Flockulation | FS 103%, kein Rub-out, keine Flockulation | FS 95%, kein Rub-out, keine Flockulation | 649 mPas | sehr gut |
| 19 | FS 102%, kein Rub-out, keine Flockulation | FS 105%, kein Rub-out, keine Flockulation | FS 106%, kein Rub-out, keine Flockulation | FS 99%, geringer Rubout, keine Flockulation | FS 97%, kein Rub-out keine Flockulation | FS 104%, kein Rub-out, keine Flockulation | 877 mPas | ausreichend gut |
| 20 | FS 100%, kein Rub-out, keine Flockulation | FS 100%, kein Rub-out, keine Flockulation | FS 101%, kein Rub-out, keine Flockulation | FS 104%, geringer Rub-out, keine Flockulation | FS 101%, kein Rub-out, keine Flockulation | FS 102%, kein Rub-out, keine Flockulation | 313 mPas | sehr gut |
| 21 | FS 104%. kein Rub-out, keine Flockulation | FS 101%, kein Rub-out, keine Flockulation | FS 98%, kein Rub-out, keine Flockulation | FS 95%, geringer Rub-out, keine Flockulation | FS 102%, kein Rub-out, keine Flockulation | FS 106%, kein Rub-out, keine Flockulation | 622 mPas | sehr gut |
| 22 | FS 103%, kein Rub-out, keine Flockulation | FS 108%, kein Rub-out, keine Flockulation | FS 99%, kein Rub-out, keine Flockulation | FS 98%, kein Rub-out, keine Flockulation | FS 101%, kein Rub-out, keine Flockulation | FS 11%, geringer Rub-out, geringe Flockulation | 269 mPas | gut |
| 23 | FS 99%, kein Rub-out, keine Flockulation | FS 97%, kein Rub-out, keine Flockulation | FS 100%, kein Rub-out, keine Flockulation | FS 101%, geringe Rub-out, keine Flockulation | FS 105%, kein Rub-out, keine Flockulation | FS 102%, kein Rub-out, keine Flockulation | 411 mPas | sehr gut |

## Patentansprüche

1. Wässrige Pigmentpräparation, enthaltend
(A) mindestens ein organisches und/oder anorganisches Pigment,
(B) ein Dispergiermittel der Formel (I) oder (II), oder Mischungen der Dispergiermittel der Formeln (I) und (II), 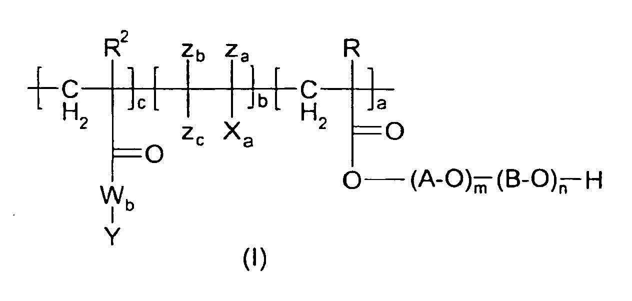 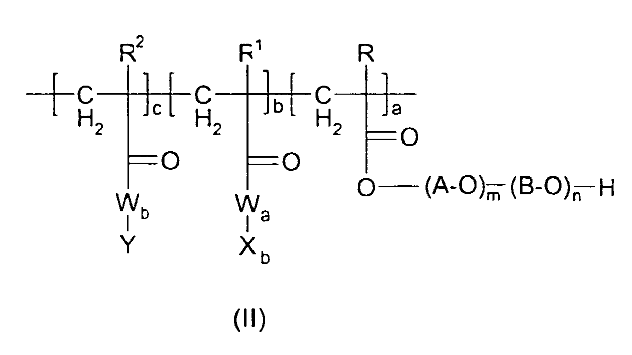 wobei
die Indices a, b und c den molaren Anteil des jeweiligen Monomeren angeben
a = 0,01 - 0,8
b = 0,001 - 0,8
c = 0,001 - 0,8
wobei die Summe aus a + b + c gleich 1 ist, und
A für C₂-C₄-Alkylen und
B für ein von A unterschiedliches C₂-C₄-Alkylen steht,
R für Wasserstoff oder Methyl steht,
m eine Zahl von 1 bis 500 ist;
n eine Zahl von 1 bis 500 ist;
wobei die Summe m + n gleich 2 bis 1000 ist;
Xₐ für einen aromatischen oder araliphatischen Rest mit 3 bis 30 C-Atomen steht, der gegebenenfalls eines oder mehrere der Heteroatome N, O und S enthält,
Zₐ für H oder (C₁-C₄)-Alkyl steht,
Z_{b} für H oder (C₁-C₄)-Alkyl steht,
Z_{c} für H oder (C₁-C₄)-Alkyl steht;
R¹ für Wasserstoff oder Methyl steht,
X_{b} für einen aromatischen oder araliphatischen Rest mit 3 bis 30 C-Atomen steht, der gegebenenfalls eines oder mehrere der Heteroatome N, O und S enthält,
Wₐ für Sauerstoff oder die Gruppe NH steht,
R² für Wasserstoff oder Methyl steht,
Y für einen aliphatischen Kohlenwasserstoffrest mit 1 bis 30 C-Atomen steht, der linear oder verzweigt, oder auch cyclisch sein kann, und die Heteroatome O, N und/oder S enthalten kann und auch ungesättigt sein kann,
W_{b} für Sauerstoff oder die Gruppe NH steht;
(C) gegebenenfalls Benetzer,
(D) gegebenenfalls weitere Tenside und/oder Dispergiermittel,
(E) gegebenenfalls ein oder mehrere organische Lösemittel und/oder eine oder mehrere hydrotrope Substanzen,
(F) gegebenenfalls weitere zur Herstellung wässriger Pigmentdispersionen übliche Zusatzstoffe, und
(G) Wasser.

2. Pigmentpräparation nach Anspruch 1, enthaltend 5 bis 80 Gew.-% der Komponente (A).

3. Pigmentpräparation nach Anspruch 1 oder 2, enthaltend 0,1 bis 30 Gew.-% der Komponente (B).

4. Pigmentpräparation nach mindestens einem der Ansprüche 1 bis 3, **gekennzeichnet durch** folgende Zusammensetzung der Komponenten (A) bis (G):
(A) 5 bis 80 Gew.-%,
(B) 0,1 bis 30 Gew.-%,
(C) 0 bis 10 Gew.-%,
(D) 0 bis 20 Gew.-%,
(E) 0 bis 30 Gew.-%,
(F) 0 bis 20 Gew.-%,
(G) Rest Wasser,
jeweils bezogen auf das Gesamtgewicht der Pigmentpräparation.

5. Pigmentpräparation nach mindestens einem der Ansprüche 1 bis 4, **gekennzeichnet durch** folgende Zusammensetzung der Komponenten (A) bis (G):
(A) 10 bis 70 Gew.-%
(B) 2 bis 15 Gew.-%,
(C) 0,1 bis 5 Gew.-%,
(D) 1 bis 10 Gew.-%,
(E) 5 bis 20 Gew.-%,
(F) 0,1 bis 5 Gew.-%,
(G) Rest Wasser,
jeweils bezogen auf das Gesamtgewicht der Pigmentpräparation.

6. Pigmentpräparation nach mindestens einem der Ansprüche 1 bis 5, **dadurch gekennzeichnet, dass** das organische Pigment von Komponente (A) ein Monoazo-, Disazo-, verlacktes Azo-, β-Naphthol-, Naphthol AS-, Benzimidazolon-, Disazokondensations-, Azo-Metallkomplex-Pigment oder ein polycyclisches Pigment aus der Gruppe der Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße ist.

7. Pigmentpräparation nach mindestens einem der Ansprüche 1 bis 6, **dadurch gekennzeichnet, dass** in Komponente (B) die Alkylenoxideinheiten (A-O)ₘ und (B-O)ₙ blockartig angeordnet sind.

8. Pigmentpräparation nach mindestens einem der Ansprüche 1 bis 7, **dadurch gekennzeichnet, dass** in Komponente (B) (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten stehen, wobei der molare Anteil der Ethylenoxid-Einheiten 50 bis 98 %, bezogen auf die Summe der Ethylenoxid- und Propylenoxid-Einheiten, beträgt.

9. Verfahren zur Herstellung einer Pigmentpräparation nach mindestens einem der Ansprüche 1 bis 8, **dadurch gekennzeichnet, dass** man die Komponente (A) in Form von Pulver, Granulat oder wässrigem Presskuchen in Gegenwart von Wasser (G) sowie den Komponenten (B) und gegebenenfalls (C) und (D) dispergiert, anschließend gegebenenfalls Wasser (G), sowie gegebenenfalls eine oder mehrere der Komponenten (E) und (F) zumischt und gegebenenfalls die erhaltende wässrige Pigmentdispersion mit Wasser (G) verdünnt;
oder die Komponenten (B) vorgibt und gegebenenfalls eine oder mehrere der Komponenten (C), (D), (E) und (F) zunächst vermischt und homogenisiert, dann die Komponente (A) in die vorgelegte Mischung eingerührt, wobei die Komponente (A) angeteigt und vordispergiert wird.

10. Verwendung einer Pigmentpräparation nach einem oder mehreren der Ansprüche 1 bis 8 zum Pigmentieren natürlicher oder synthetischer Materialien.

11. Verwendung nach Anspruch 10 zum Pigmentieren von wässrigen Anstrichmitteln, Dispersions- und Lackfarben, wasserverdünnbaren Lacken, Tapetenfarben und Druckfarben.

12. Verwendung nach Anspruch 10 zum Pigmentieren von natürlichen und synthetischen Fasermaterialien, Cellulosefasern, zur Papiermassefärbung und Laminateinfärbung sowie zur Herstellung von Drucktinten, Ink-Jet-Tinten, elektrophotographischen Tonern, Pulverlacken, Farbfiltern, elektronischen Tinten und "Electronic Paper". Color Filter, Holzschutzsystemen, Viskose-Spinnfärbung, Wurstdärmen, Saatgut, Düngemitteln, Glasflaschen, sowie zur Massefärbung von Dachziegeln, zur Einfärbung für Putze, Beton, Holzbeizen, Buntstiftminen, Faserschreibern, Wachsen, Paraffinen, Tuschen, Pasten für Kugelschreiber, Kreiden, Wasch- und Reinigungsmitteln, Schuhpflegemitteln, Latex-Produkten, Schleifmitteln sowie zum Einfärben von Kunststoffen.

## Claims

1. An aqueous pigment preparation comprising
(A) at least one organic and/or inorganic pigment,
(B) a dispersant of formula (I) or (II) or mixtures of dispersants of formulae (I) and (II), 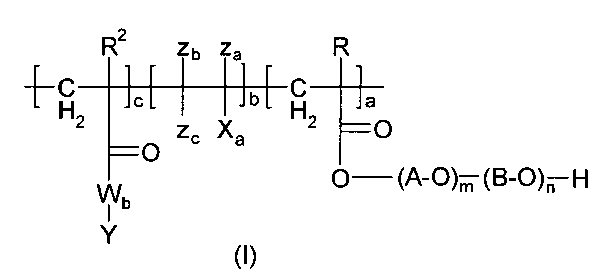 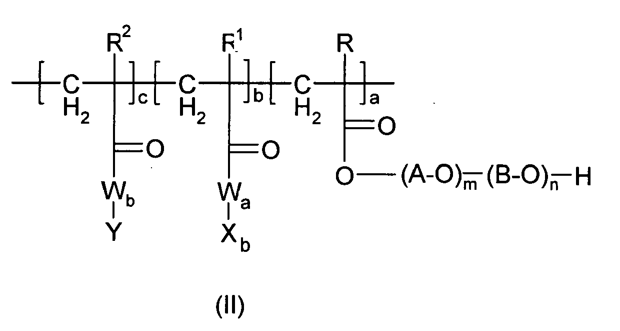 where
the indices a, b and c indicate the molar fraction of the respective monomers
a = 0.01 - 0.8
b = 0.001 - 0.8
c = 0.001 - 0.8
provided the sum total of a + b + c is 1, and
A represents C₂-C₄-alkylene,
B represents a C₂-C₄-alkylene other than A,
R represents hydrogen or methyl,
m is from 1 to 500;
n is from 1 to 500;
provided the sum total of m + n is from 2 to 1000;
Xₐ represents an aromatic or araliphatic radical having 3 to 30 carbon atoms which optionally contains one or more of the hetero atoms N, O and S,
Zₐ represents H or (C₁-C₄)-alkyl,
Z_{b} represents H or (C₁-C₄)-alkyl,
Z_{c} represents H or (C₁-C₄)-alkyl;
R¹ represents hydrogen or methyl,
X_{b} represents an aromatic or araliphatic radical having 3 to 30 carbon atoms which optionally contains one or more of the heteroatoms N, O und S,
Wₐ represents oxygen or an NH group,
R² represents hydrogen or methyl,
Y represents an aliphatic hydrocarbyl radical having 1 to 30 carbon atoms, which may be linear or branched or else cyclic, and which may contain hetero atoms O, N and/or S and may also be unsaturated,
W_{b} represents oxygen or an NH group;
(C) optionally wetters,
(D) optionally further surfactants and/or dispersants,
(E) optionally one or more organic solvents and/or one or more hydrotropic substances,
(F) optionally further additive materials customary for preparing aqueous pigment dispersions, and
(G) water.

2. The pigment preparation as claimed in claim 1, comprising 5% to 80% by weight of said component (A).

3. The pigment preparation as claimed in claim 1 or 2, comprising 0.1 % to 30% by weight of said component (B).

4. The pigment preparation as claimed in at least one of claims 1 to 3, **characterized by** the following composition of said components (A) to (G):
(A) 5% to 80% by weight,
(B) 0.1 % to 30% by weight,
(C) 0% to 10% by weight,
(D) 0% to 20% by weight,
(E) 0% to 30% by weight,
(F) 0% to 20% by weight,
(G) balance water,
all based on the total weight of said pigment preparation.

5. The pigment preparation as claimed in at least one of claims 1 to 4, **characterized by** the following composition of said components (A) to (G):
(A) 10% to 70% by weight,
(B) 2% to 15% by weight,
(C) 0.1 % to 5% by weight,
(D) 1% to 10% by weight,
(E) 5% to 20% by weight,
(F) 0.1 % to 5% by weight,
(G) balance water,
all based on the total weight of said pigment preparation.

6. The pigment preparation as claimed in at least one of claims 1 to 5, wherein the organic pigment of said component (A) is a monoazo, disazo, laked azo, β-naphthol, Naphthol AS, benzimidazolone, disazo condensation, azo metal complex pigment or a polycyclic pigment from the group of the phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments or carbon blacks.

7. The pigment preparation as claimed in at least one of claims 1 to 6, wherein the alkylene oxide units (A-O)ₘ and (B-O)ₙ are arranged blocklike in said component (B).

8. The pigment preparation as claimed in at least one of claims 1 to 7, wherein, in said component (B), (A-O)ₘ represents propylene oxide units and (B-O)ₙ represents ethylene oxide units, or (A-O)ₘ represents ethylene oxide units and (B-O)ₙ represents propylene oxide units, and the molar fraction of ethylene oxide units is in the range from 50 to 98%, based on the sum total of ethylene oxide and propylene oxide units.

9. A process for producing a pigment preparation as claimed in at least one of claims 1 to 8, which comprises dispersing said component (A) in the form of powder, granulate or aqueous presscake in the presence of water (G) and also said components (B) and optionally (C) and (D), then optionally admixing water (G) and also optionally one or more of said components (E) and (F) and optionally diluting the resulting aqueous pigment dispersion with water (G);
or said components (B) being precharged and optionally one or more of said components (C), (D), (E) and (F) being initially mixed and homogenized, then said component (A) being stirred into the initially charged mixture, said component (A) being incipiently pasted and predispersed.

10. The use of a pigment preparation as claimed in one or more of claims 1 to 8 for pigmenting natural or synthetic materials.

11. The use as claimed in claim 10 for pigmenting aqueous paints, emulsion and varnish colors, water-thinnable varnishes, wallpaper colors and printing inks.

12. The use as claimed in claim 10 for pigmenting natural and synthetic fiber materials, cellulose fibers, for paper pulp coloration and laminate coloration and also for production of printing inks, ink-jet inks, electrophotographic toners, powder coatings, color filters, electronic inks and "electronic paper", color filters, wood preservation systems, viscose dope dyeing, sausage casings, seed, fertilizers, glass bottles, and also for mass coloration of roof shingles, in coloration for renders, concrete, wood stains, colored pencil leads, felt tip pens, waxes, paraffins, graphics inks, ballpoint pen pastes, chalks, washing and cleaning compositions, shoe care agents, latex products, abrasives, and also for coloration of plastics.

## Revendications

1. Composition aqueuse de pigment, contenant
(A) au moins un pigment organique et/ou un pigment organique,
(B) un dispersant de formule (I) ou (II), ou des mélanges des dispersants de formules (I) et (II), 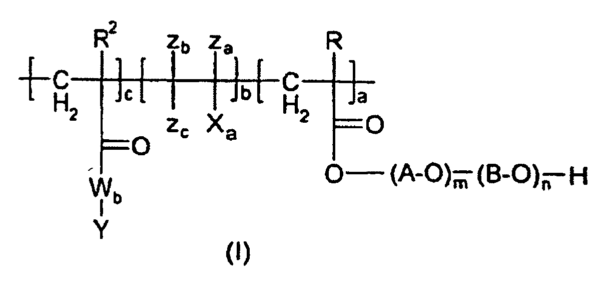 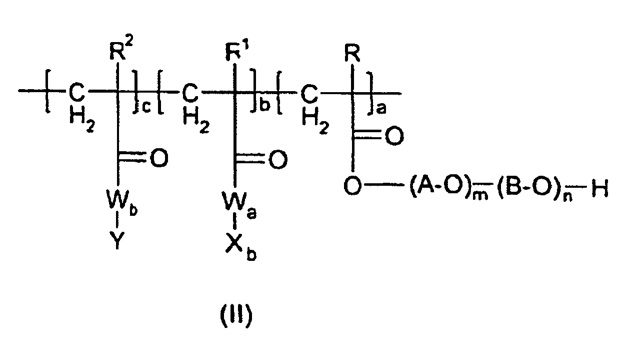 dans lesquelles
les indices a, b et c indiquent la proportion molaire du monomère respectif
a = 0,01 - 0,8
b = 0,001 - 0,8
c = 0,001 - 0,8
la somme de a + b + c étant égale à 1, et
A représente un groupe alkylène en C₂-C₄,
B représente un groupe alkylène en C₂-C₄ différent de A,
R représente un atome d'hydrogène ou le groupe méthyle,
m est un nombre valant de 1 à 500,
n est un nombre valant de 1 à 500,
la somme m + n valant de 2 à 1 000,
Xₐ représente un radical aromatique ou araliphatique ayant de 3 à 30 atomes de carbone, qui contient éventuellement un ou plusieurs des hétéroatomes N, O et S,
Zₐ représente H ou un groupe alkyle en C₁-C₄,
Z_{b} représente H ou un groupe alkyle en C₁-C₄,
Z_{c} représente H ou un groupe alkyle en C₁-C₄,
R¹ représente un atome d'hydrogène ou le groupe méthyle,
X représente un radical aromatique ou araliphatique ayant de 3 à 30 atomes de carbone, qui contient éventuellement un ou plusieurs des hétéroatomes N, O et S,
Wₐ représente un atome d'oxygène ou le groupe NH,
R² représente un atome d'hydrogène ou le groupe méthyle,
Y représente un radical hydrocarboné aliphatique ayant de 1 à 30 atomes de carbone, qui peut être linéaire ou ramifié, ou bien cyclique, et qui peut contenir des hétéroatomes O, N et/ou S et peut également être insaturé,
W_{b} représente un atome d'oxygène ou le groupe NH ;
(C) éventuellement un agent mouillant,
(D) éventuellement d'autres tensioactifs et/ou dispersants,
(E) éventuellement un ou plusieurs solvants organiques et/ou une ou plusieurs substances hydrotropes,
(F) éventuellement d'autres additifs usuels pour la préparation de dispersions aqueuses de pigments, et
(G) de l'eau.

2. Composition de pigment selon la revendication 1, contenant de 5 à 80 % en poids du composant (A).

3. Composition de pigment selon la revendication 1 ou 2, contenant de 0,1 à 30 % en poids du composant (B).

4. Composition de pigment selon au moins l'une des revendications 1 à 3, **caractérisée par** les teneurs suivantes en les composants (A) à (G) :
(A) de 5 à 80 % en poids,
(B) de 0,1 à 30 % en poids,
(C) de 0 à 10 % en poids,
(D) de 0 à 20 % en poids,
(E) de 0 à 30 % en poids,
(F) de 0 à 20 % en poids,
(G) le reste consistant en eau,
chaque fois par rapport au poids total de la composition de pigment.

5. Composition de pigment selon au moins l'une des revendications 1 à 4, **caractérisée par** les teneurs suivantes en les composants (A) à (G) :
(A) de 10 à 70 % en poids,
(B) de 2 à 15 % en poids,
(C) de 0,1 à 5 % en poids,
(D) de 1 à 10 % en poids,
(E) de 5 à 20 % en poids,
(F) de 0,1 à 5 % en poids,
(G) le reste consistant en eau,
chaque fois par rapport au poids total de la composition de pigment.

6. Composition de pigment selon au moins l'une des revendications 1 à 5, **caractérisée en ce que** le pigment organique du composant (A) est un pigment monoazoïque, disazoïque, azoïque laqué, β-naphtol, naphtol AS, benzimidazolone, de condensation disazoïque, azoïque à complexe métallifère ou un pigment polycyclique choisi dans le groupe des pigments phtalocyanine, quinacridone, pérylène, périnone, thio-indigo, anthanthrone, anthraquinoniques, flavanthrone, indanthrone, isoviolanthrone, pyranthrone, dioxazine, quinophtalone, iso-indolinone, iso-indoline et dicétopyrrolopyrrole ou les noirs de carbone.

7. Composition de pigment selon au moins l'une des revendications 1 à 6, **caractérisée en ce que** dans le composant (B) les unités oxyde d'alkylène (A-O)ₘ et (B-O)ₙ sont disposées séquentiellement.

8. Composition de pigment selon au moins l'une des revendications 1 à 7, **caractérisée en ce que** dans le composant (B) (A-O)ₘ représente des unités oxyde de propylène et (B-O)ₙ représente des unités oxyde d'éthylène, ou (A-O)ₘ représente des unités oxyde d'éthylène et (B-O)ₙ représente des unités oxyde de propylène, la proportion molaire des unités oxyde d'éthylène valant de 50 à 98 %, par rapport à la somme des unités oxyde d'éthylène et oxyde de propylène.

9. Procédé pour la préparation d'une composition de pigment selon l'une quelconque des revendications 1 à 8, **caractérisé en ce qu'**on disperse le composant (A) sous forme de poudre, de granulé ou de tourteau aqueux de filtration, en présence d'eau (G) ainsi que des composants (B) et éventuellement (C) et (D), ensuite on incorpore éventuellement de l'eau (G) ainsi qu'éventuellement un ou plusieurs des composants (E) et (F) et éventuellement on dilue avec de l'eau (G) la dispersion aqueuse de pigment obtenue ; ou on dispose au préalable le composant (B) et éventuellement d'abord on mélange et homogénéise un ou plusieurs des composants (C), (D), (E) et (F), puis on délaie le composant (A) dans le mélange disposé au préalable, de sorte que le composant (A) est transformé en une pâte et pré-dispersé.

10. Utilisation d'une composition de pigment selon une ou plusieurs des revendications 1 à 8, pour la pigmentation de matières naturelles ou synthétiques.

11. Utilisation selon la revendication 10, pour la pigmentation de produits d'enduction à l'eau, de peintures et peintures-dispersions, de peintures diluables à l'eau, d'encres d'impression pour papiers-peints et d'encres d'impression.

12. Utilisation selon la revendication 10, pour la pigmentation de matières fibreuses naturelles et synthétiques, de fibres de cellulose, pour la coloration du papier dans la masse et la coloration de stratifiés ainsi que pour la fabrication d'encres d'imprimerie, d'encres pour impression par jet d'encre, de toners électrophotographiques, de peintures en poudre, de filtres colorés, d'encres électroniques et d'« Electronic Paper » (papier électronique), de filtres colorés, de systèmes pour la protection du bois, pour la coloration dans la masse de viscose, pour la fabrication de boyaux pour saucisses, la coloration de semences, de fertilisants, de flacons en verre, ainsi que pour la coloration dans la masse de tuiles, pour la coloration d'enduits, de béton, de produits pour la coloration du bois, de mines pour crayons de couleur, de crayons-feutres, de cires, de paraffines, d'encres de Chine, de pâtes pour stylos à bille, de craies, de produits de lavage et de nettoyage, de produits d'entretien pour chaussures, de produits à base de latex, de produits abrasifs ainsi que pour la coloration de matières plastiques.
